(19) Europäisches Patentamt
European Patent Office
Office européen des brevets

(11) Publication number: 0 082 424
A2

# (12) EUROPEAN PATENT APPLICATION

(21) Application number: 82111410.5

(22) Date of filing: 09.12.82

(51) Int. Cl.³: C 08 L 71/04
C 08 L 25/00, C 08 L 51/06

(30) Priority: 22.12.81 US 333326

(43) Date of publication of application: 29.06.83 Bulletin 83/26

(84) Designated Contracting States: DE FR GB IT NL

(71) Applicant: GENERAL ELECTRIC COMPANY
1 River Road
Schenectady New York 12305(US)

(72) Inventor: Cooper, Glenn Dale
42 The Crossway
Delmar New York 12054(US)

(72) Inventor: Katchman, Arthur
31 Carriage Road
Delmar New York, 12054(US)

(74) Representative: Schüler, Horst, Dr. European Patent Attorney et al,
Kaiserstrasse 41
D-6000 Frankfurt/Main 1(DE)

## (54) Composition of PPE and PS-grafted EPDM where gel fraction has swelling index of less than 11.0.

(57) An improved thermoplastic composition comprising an admixture of polyphenylene ether resin and alkenyl aromatic resin modified with a rubbery ethylene-alpha-olefin-polyene interpolymer the gel fraction of which has a swelling index of less than about 11.0.

EP 0 082 424 A2

10151-8CN-3360

## Background of the Invention

Thermoplastic compositions containing polyphenylene ether (or oxide) in admixture with alkenyl aromatic resins are well-known. Examples are, for example, described in U.S. Patent No. 3,383,435 of Eric P. Cizek, the disclosure of which is incorporated herein by reference. Such compositions are most generally employed in the production of molded and/or extruded articles.

Polyphenylene ethers are known and described in numerous publications including U.S. Patent Nos. 3,306,874 and 3,306,875 of Allan S. Hay and U.S. Patent Nos. 3,257,357 and 3,257,358 of Gelu Stoeff Stamatoff. The high molecular weight polymers are high performance engineering thermoplastics possessing relatively high melt viscosities and softening points - i.e., in excess of 275°C. - and are useful for many commercial applications requiring high temperature resistance including formation of film, fiber and molded articles.

For many uses, the high performance properties are not necessary and the relatively high melt viscosities and softening points are a disadvantage. For example, film and fiber can only be formed on a commercial scale from solution; melt processing being commercially unattractive because of the required high temperatures

needed to soften the polymer and the problems associated therewith such as instability, discoloration and the requirement for specially designed process equipment to operate at elevated temperatures. Molded articles can be formed by melt processing techniques, but again, the high temperatures required are undesirable.

Because of low cost and an overall combination of fair to good properties, alkenyl aromatic resins such as polystyrene have found wide and diversified commercial acceptance. However, such resins are usually brittle, possess a relatively low heat distortion temperature and have relatively poor resistance to the more common organic solvents. It is known in the art that various of these properties of alkenyl aromatics may be improved by copolymerizing with other monomers or by blending with other resins.

As is also described in the Cizek patent, modifiers such as butadiene may be incorporated into the alkenyl aromatic resins to improve the properties of resultant compositions. Such modified resins provide means for overcoming various physical drawbacks of alkenyl aromatic resins, particularly polystyrene, while simultaneously facilitating the processing of polyphenylene ethers.

Other such modifiers are also known. In, for example, U.S. Patent No. 3,658,945 of Nakashio et al., it is disclosed that alkenyl aromatic resins may be graft-modified onto ethylene-alpha-olefin-polyene terpolymer. They disclose that 0.5 to 15% of terpolymer by total composition weight, where the graft copolymer contains from 5 to 80% of styrene compound, is needed to enhance impact

strength at levels up to about 30% of styrene-EPDM graft copolymer by total composition weight.

Such graft copolymers are also described in U.S. Patent Nos. 3,943,191; 3,959,211; 3,974,235; 4,101,503; 4,101,504; 4,101,505; and 4,102,850 of Glenn D. Cooper et al. and elsewhere.

## Introduction to the Invention

The present invention relates to improved thermoplastic compositions comprising an admixture of polyphenylene ether and a rubber-modified alkenyl aromatic resin. The alkenyl aromatic resin is modified with a rubbery ethylene-alpha-olefin-polyene polymer and the gel fraction of the so-modified alkenyl aromatic resin has a swelling index of less than 11.0, and preferably from 7.5 to 11.

## Description of the Invention

The polyphenylene oxide resins useful in accordance with the present kinds of compositions are, as previously indicated, individually well known and readily available. There are, however, various preferred composition components. These are primarily ones commonly having applications for which high impact strength is particularly desirable.

The preferred polyphenylene ethers are homo- and copolymers of the formula:

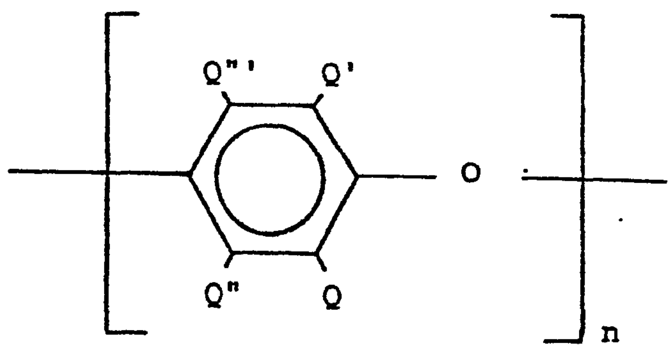

wherein Q, Q', Q" and Q"' are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atoms and the phenol nucleus, and Q', Q" and Q"' in addition may be halogen with the proviso that Q and Q' are preferably free of a tertiary carbon atom; and n represents the total number of monomer residues and is an integer of at least 50.

Especially preferred is poly(2,6-dimethyl-1,4-phenylene)ether.

0082424

The alkenyl aromatic resins and/or grafted portions thereof are likewise well known and are preferably derived from monomers of the formula:

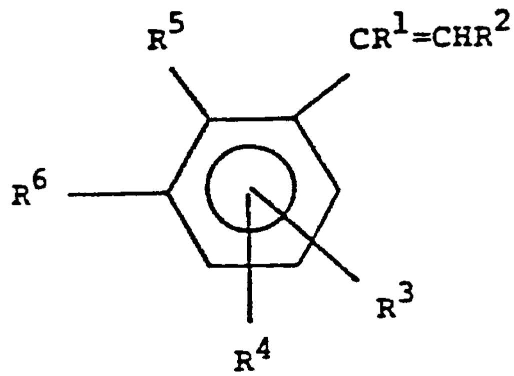

wherein $R^1$ and $R^2$ are selected from the group consisting of lower alkyl or alkenyl groups of from 1 to 6 carbon atoms and hydrogen. $R^3$ and $R^4$ are selected from the group consisting of chloro, bromo, hydrogen and lower alkyl of from 1 to 6 carbon atoms; $R^5$ and $R^6$ are selected from the group consisting of hydrogen and lower alkyl and alkenyl groups of from 1 to 6 carbon atoms or $R^5$ and $R^6$ may be concatenated together with hydrocarbyl groups to form a naphthyl group.

Specific examples of alkenyl aromatic monomers include styrene, chlorostyrene, alpha-methylstyrene, vinyl xylene, divinylbenzene and vinyl naphthalene. Styrene is particularly preferred.

The rubbery interpolymers utilized in formation of the present grafted copolymers are formed from ethylene, alpha-olefin and polyene monomers. Preferred alpha-olefins have from 3 to 10 carbon atoms. Preferred polyenes are non-conjugated (either cyclic or open-chain) dienes. They

desirably have 5 to 20 carbon atoms. These interpolymers are desirably composed of from 10 to 90 mole percent ethylene, 10 to 90 mole percent alpha-olefin and 0.1 to 10 mole percent polyene.

Alkenyl aromatic resin may be combined with such an interpolymer by polymerizing alkenyl aromatic monomer in its presence. This may be accomplished by dissolving the interpolymer in monomer and then polymerizing the mixture in the presence of an initiator.

The interpolymer may be combined with alkenyl aromatic in virtually any proportion. Desirably, however, the rubbery interpolymer comprises 1 to 70%, most preferably from about 1 to 25% by total weight of the rubber modified alkenyl aromatic resin.

For the objects of the present invention, the rubber modified alkenyl aromatic resin should have a gel fraction swelling index of less than about 11.0, preferably from 7.5 to 11.0. It has been discovered that outside this range such properties as composition impact strength deteriorate within the proportions described below.

Selection of rubber modified alkenyl aromatic resins having the foregoing property may be ensured by a simple test. A gram sample is stirred overnight in 25 ml toluene, transferred to a tared centrifuge tube and centrifuged for 70 minutes at 15,000 rpm. After decanting the toluene solution, the residue is resuspended in 25 ml of toluene for 24 hours and again centrifuged. After fully draining the toluene solution, the weight of remaining swollen gel is taken. This may be compared to the weight of the gel after drying in a vacuum oven to provide its swelling index--viz. the ratio of swollen to dry gel weights.

In forming the present compositions, desirably the polyphenylene ether resin is present in amounts of from about 20 to about 65 parts by weight, and the rubber modified alkenyl aromatic resin in amounts of from about 80 to 35 parts by weight, based on 100 parts of the two combined. In general, it is desired that in the modified alkenyl aromatic resin the rubber portion comprises from 1 to 25% by total weight.

The compositions made according to the present invention are preferably prepared first by fine admixture of their ingredients. This may, for example, be accomplished simply by coextrusion. A substantially homogeneous admixture is preferred.

Once prepared, the present compositions may be utilized for any of the diverse purposes for which similar polyphenylene ether/polyalkenyl aromatic resin compositions have already been employed. For example, they can be used in molding powder formulations, either alone or mixed with other polymers and may contain various fillers, such diatomaceous earth, carbon black, silica, etc. They are ordinarily used to prepare molded (by injection or compression) or extruded articles. These articles may take a broad spectrum of forms including sheets, rods, etc.

/

/

/

/

/

/

/

/

/

The present compositions may also be mixed with various fillers, modifying agents, etc. such as dyes, pigments, stabilizers, plasticizers, etc. All this may be performed in a conventional manner.

The following examples are given by way of illustration only and are not intended as a limitation on the scope of this invention. Many variations are possible without departing from its spirit and scope. Unless otherwise specified herein, all proportions are provided on a weight basis.

## EXAMPLES 1-23

Sample compositions are prepared and processed into molded articles by compounding 50 parts poly(2,6-dimethyl-1,4-phenylene ether) with 50 parts polystyrene modified with an interpolymer of ethylene-propylene-5-ethylidene-2-norbornene as produced in accordance with U.S. 4,101,503. Admixture of the sample ingredients is performed by extrusion in a 28 mm Werner-Pfleiderer twin-screw extruder. The resultant composition is then molded into standard test pieces in a screw injection molding machine and tested for impact strength. All of the rubber modified resins employed contain 10% rubber and have an average rubber particle diameter of from 0.8 to 1.1 micron and volume average diameter of less than 2.0 micron. All had intrinsic viscosities above 0.55 dl/g in chloroform at 30°C.

Comparisons of the respective impact strengths for the modified polystyrene alone and also for 50/50 blends with polyphenylene ether are set forth below for different swelling indexes of the modified polystyrene.

TABLE 1

| Example | Swelling Index ** | Izod Impact Strength (ft.lbs./in. of notch) | |
|---|---|---|---|
| | | Modified Polystyrene | 50% blend with Polyphenylene ether |
| 1 | 9.5 | 0.8 | 3.5 |
| 2 | 9.0 | 0.9 | 4.7 |
| 3* | 25.0 | 1.7 | 1.1 |
| 4* | 25.0 | 2.6 | 1.1 |
| 5* | 19.0 | 2.4 | 1.1 |
| 6* | 32.0 | 3.1 | 1.1 |
| 7* | 21.0 | 3.1 | 1.1 |
| 8* | 26.0 | 2.4 | 1.1 |
| 9* | 19.0 | 1.8 | 1.7 |
| 10* | 16.0 | 1.6 | 3.0 |
| 11* | 25.0 | 2.3 | 0.9 |
| 12* | 11.6 | 0.9 | 2.5 |
| 13 | 8.1 | 1.0 | 4.2 |
| 14* | 13.6 | 1.5 | 3.0 |
| 15 | 10.0 | 1.1 | 3.4 |
| 16 | 8.2 | 0.5 | 3.7 |
| 17 | 9.2 | 0.8 | 3.3 |
| 18* | 26.5 | 1.6 | 1.8 |
| 19 | 8.5 | 0.8 | 4.1 |
| 20 | 9.1 | 0.8 | 4.6 |
| 21 | 8.7 | 0.8 | 4.5 |
| 22 | 8.2 | 0.8 | 4.9 |
| 23 | 8.6 | 0.8 | 4.8 |

* comparison experiment, swelling index above about 11 -- not in accordance with invention.

** of gel fraction of modified polystyrene.

The results indicate the importance of a swelling index of less than about 11 on the impact strength of the blends. They also indicate that the impact strength of the polystyrene alone is adversely affected by lower swelling index. See Drawing.

## EXAMPLES 24-25

Sample compositions are prepared, processed and analyzed as in Examples 1-23 at different proportions of polyphenylene ether (PPO). The results are as follows:

TABLE 2

| Example | Swelling Index ** | Izod Impact Strength | | | |
|---|---|---|---|---|---|
| | | 35% PPO | 40% PPO | 55% PPO | 60% PPO |
| 24 | 8.0 | -- | 4.5 | 4.9 | -- |
| 25 | 9.0 | 4.1 | 4.1 | 4.5 | 4.8 |

** as in Table 1

The results reflect the broad range of resin proportions over which a swelling index of less than about 11 is important.

The above mentioned patents and/or publications are incorporated herein by reference. Obviously, other modifications and variations of the present invention are possible in light of the above teachings. For example, instead of poly(2,6-dimethyl-1,4-phenylene)ether there can be substituted poly(2,6-dimethyl-co-2,3,6-trimethyl-1,4-phenylene)ether copolymer. In addition, conventional reinforcements and/or fillers, flame retardants, stabilizers, colorants, impact modifiers can be used in conventional amounts. It is therefore to be understood that changes

may be made in the particular embodiments of the invention described which are within the full intended scope of the invention as defined by the appended claims.

CLAIMS:

1. A thermoplastic composition comprising an admixture of from 20 to 65 parts by weight of polyphenylene ether resin and from 80 to 35 parts by weight of alkenyl aromatic resin, at least a portion of said alkenyl aromatic resin being modified with a rubbery ethylene-α olefin-polyene interpolymer, wherein the gel fraction of said modified alkenyl aromatic has a swelling index of less than about 11.0.

2. The composition of Claim 1, wherein the rubbery portion of the rubber modified alkenyl aromatic comprises from 1 to 25% by total weight of the alkenyl aromatic.

3. The composition of Claim 1, wherein the polyalkenyl aromatic resin comprises polystyrene.

4. The composition of Claim 1, wherein the modified alkenyl aromatic resin has a swelling index of from 7.5 to 11.0.

5. The composition of Claim 1, wherein the polyene of the interpolymer comprises dicyclopentadiene or ethylidene norbornene.

6. The composition of Claim 1, wherein the interpolymer comprises from about 10 to 90% ethylene, about 10 to 90 alpha-olefin and about 0.1 to 10% polyene by mole.

1/1

0082424

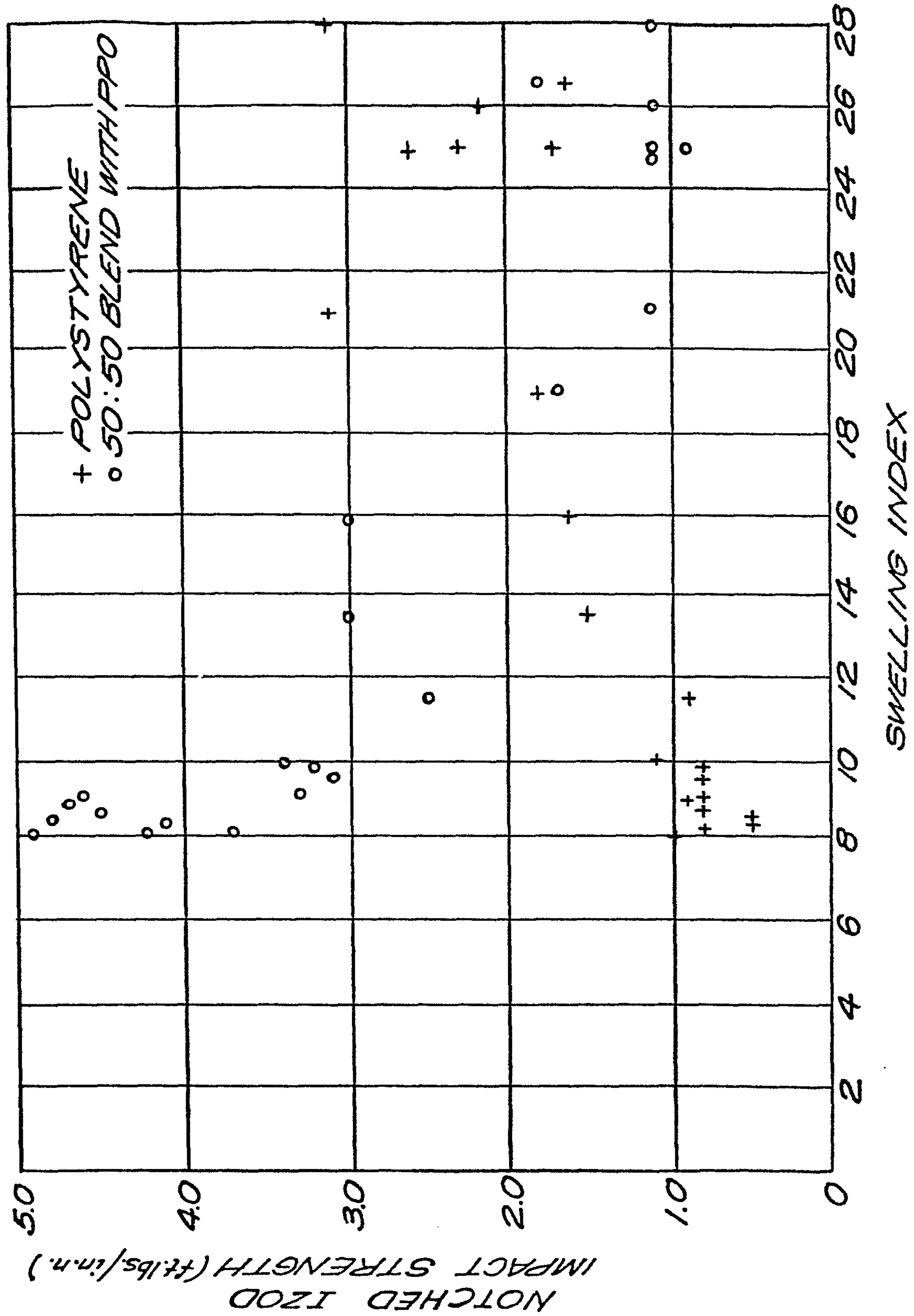

+ POLYSTYRENE
o 50:50 BLEND WITH PPO
SWELLING INDEX
2
4
6
8
10
12
14
16
18
20
22
24
26
28
NOTCHED IZOD
IMPACT STRENGTH (ft.lbs./in.n.)
0
1.0
2.0
3.0
4.0
5.0